# DEMANDE DE BREVET EUROPEEN

(11) **EP 0 619 571 A1**
(43) Date de publication de la demande: **12.10.1994**
(21) Numéro de dépôt: 94400751.7
(22) Date de dépôt: 06.04.1994
(51) Int. Cl.: G09G 3/20, G09G 3/36

(54) **Afficheur matriciel en couleurs**

(30) Priorité: 08.04.1993 FR 9304196
(71) Demandeur: SAGEM SA, F-75783 Paris Cédex 16 (FR)
(72) Inventeur: Deffontaines, Christophe, F-75012 Paris (FR); Parker, Ambroise, F-92500 Rueil-Malmaison (FR); Tison, Philippe, F-95100 Argenteuil (FR)
(74) Mandataire: Fort, Jacques

(57) **Abrégé**

L'afficheur est destiné à fournir une image sous forme de pixels suivant un réseau régulier, comportant au moins trois jeux de pixels respectivement verts, rouges et bleus, les pixels de chaque jeu étant répartis suivant une matrice comportant des lignes et des colonnes, tous les pixels d'une même ligne étant simultanément adressés pour écriture par des conducteurs de colonne respectifs. Chacun des conducteurs de colonne affectés à des pixels rouge ou bleu écrit dans une surface à peu près double de celle dans laquelle écrit un conducteur de colonne affecté à un pixel vert et en ce que la période temporelle ou spatiale d'écriture des pixels verts est moitié de la période d'écriture des pixels rouge et bleu.

## Description

La présente invention concerne les afficheurs matriciels en couleurs, fournissant une image sous forme de points élémentaires ou "pixels", répartis suivant un réseau régulier. Elle concerne plus particulièrement un afficheur matriciel du type comportant au moins trois jeux de pixels respectivement verts, rouges et bleus, les pixels de chaque jeu étant répartis suivant une matrice comportant des lignes et des colonnes, tous les pixels d'une même ligne étant simultanément adressés pour écriture par des conducteurs de colonne respectifs, la surface totale active ou photo-émissive des pixels étant en général la même pour les trois jeux de façon à obtenir un équilibre des couleurs.

L'invention est applicable à de très nombreux types d'afficheurs matriciels, parmi lesquels on peut notamment citer les écrans à cristaux liquides (qu'ils soient du type dit multiplexé ou du type dit à matrice active), les écrans électroluminescents, les écrans à diodes électroluminescentes et les écrans à plasma.

Dans les afficheurs matriciels en couleurs traditionnels, on constitue chaque pixel coloré, que par commodité on appelera par la suite macropixel, par juxtaposition d'au moins trois pixels affectés chacun à une des couleurs primaires (habituellement vert, rouge et bleu). La brillance de chaque pixel est modulée, soit par réglage d'un rapport cyclique d'allumage, soit plus fréquemment par réglage de la luminance, de façon à obtenir la couleur souhaitée.

Plusieurs dispositions des pixels sont couramment utilisées. On peut citer les arrangements en bande (où les trois pixels constituant un même macro-pixel sont disposés côte à côte sur une même ligne droite), en triade (les trois pixels étant disposés aux sommets d'un triangle équilatéral), et en quad (où quatre pixels sont disposés aux coins d'un carré et représentent les trois couleurs primaires ainsi qu'une couleur supplémentaire ou le blanc).

Un problème majeur dans la réalisation des afficheurs matriciels est la densité des connexions à effectuer. En effet le nombre de connexions entre l'afficheur proprement dit et son électronique de commande est égal à la somme du nombre de lignes et du nombre de colonnes : pour un écran où chaque macro-pixel comporte trois pixels en bande, il faut 2 080 connexions pour 640 lignes de 480 macro-pixels. Toute défaillance d'une connexion provoque l'extinction d'un ou plusieurs pixels et dégrade l'image. Or le risque de défaillance augmente avec la complexité du cheminement.

La réalisation de chaque macro-pixel en trois pixels (ou davantage) a par ailleurs l'inconvénient de réduire le facteur d'ouverture, c'est-à-dire la fraction active de la surface de l'afficheur, celle qui émet effectivement de la lumière. En effet chaque pixel doit être séparé de son voisin par une ligne opaque pour tenir compte des tolérances de fabrication et éviter des interférences entre pixels voisins. Par exemple, le facteur d'ouverture d'un écran à cristaux liquides actuel à matrice active ne dépasse guère 50%. Or toute diminution du facteur d'ouverture ne peut être compensée que par un éclairage arrière plus puissant.

La présente invention vise notamment à fournir un afficheur permettant de réduire le nombre des connexions pour une qualité d'image donnée, ou réciproquement d'augmenter la définition pour un nombre de connexions donné.

L'invention utilise dans ce but la constatation que l'oeil humain a une acuité visuelle et une sensibilité au niveau de la luminance pour le vert qui sont à peu près doubles de celles pour le rouge et le bleu.

En conséquence, il est apparu possible de ne restituer l'information pour le rouge et le bleu que deux fois moins souvent (temporellement et/ou spatialement) que pour le vert.

En conséquence, l'invention propose un afficheur matriciel en couleurs du type ci-dessus défini, caractérisé en ce que chacun des conducteurs de colonne affectés à des pixels rouge ou bleu écrit dans une surface à peu près double de celle dans laquelle écrit un conducteur de colonne affecté à un pixel vert et en ce que la période temporelle ou spatiale d'écriture des pixels verts est moitié de la période d'écriture des pixels rouge et bleu.

Cette constitution de principe se prête à des modes de réalisation très divers.

En particulier, les pixels rouges, verts et bleus peuvent être répartis régulièrement sur les lignes successives et avoir sensiblement la même surface. Dans ce cas le nombre des connecteurs de colonne correspondant aux pixels rouges et bleus peut être réduit de moitié, en commandant deux colonnes adjacentes de pixels rouges (ou de pixel bleus) à la fois.

Pour éviter les croisements de conducteurs de colonne, il est alors avantageux de fractionner le circuit d'attaque des conducteurs de colonnes en une unité placée d'un côté de l'afficheur et commandant les conducteurs de colonne de pixels rouges et la moitié des conducteurs de colonne de pixels verts et une unité placée de l'autre côté et commandant les conducteurs de colonne de pixels bleus et la moitié des conducteurs de colonne de pixels verts.

Les colonnes peuvent être constituées chacune de pixels de même couleur alignés les uns avec les autres ou disposés en quinconce.

Dans un autre mode de réalisation, une même ligne est constituée d'une alternance de pixels rouge, vert, bleu, vert, rouge, vert, etc..., la surface des pixels verts étant sensiblement moitié de celle des pixels rouges et bleus. Chaque colonne sera généralement commandée par un conducteur distinct affecté à une couleur, notamment si les pixels de même couleur sont alignés. Mais il est également possible de ne pas dédier les conducteurs de colonne affectés aux pixels rouges et bleus à une couleur déterminée, mais de les utiliser pour commander alternativement les pixels rouges dans une ligne, les pixels bleus dans la ligne suivante, notamment lorsque les pixels sont en quinconce.

L'invention sera mieux comprise à la lecture de la description qui suit de modes particuliers de réalisation, donnés à titre d'exemples non-limitatifs. La description se réfère aux dessins qui l'accompagnent, dans lesquels :
- la figure 1 est un schéma de principe d'une fraction d'un afficheur conforme à un premier mode de réalisation ;
- la figure 2, similaire à une fraction de la figure 1, montre une variante de réalisation ;
- la figure 3 est un chronogramme destiné à faire apparaître les instants t₀, t₀+δt, ... d'échantillonnnage des signaux de couleur pour commander un afficheur du genre montré en figure 1 ;
- les figures 4, 5, 6 et 7, similaires à la figure 2, montrent d'autres modes de réalisation ;
- la figure 8 est un schéma de principe montrant une architecture possible des entrées du circuit d'attaque de colonne ;
- la figure 9 est un chronogramme montrant l'échelonnement des commandes dans l'architecture de la figure 8.

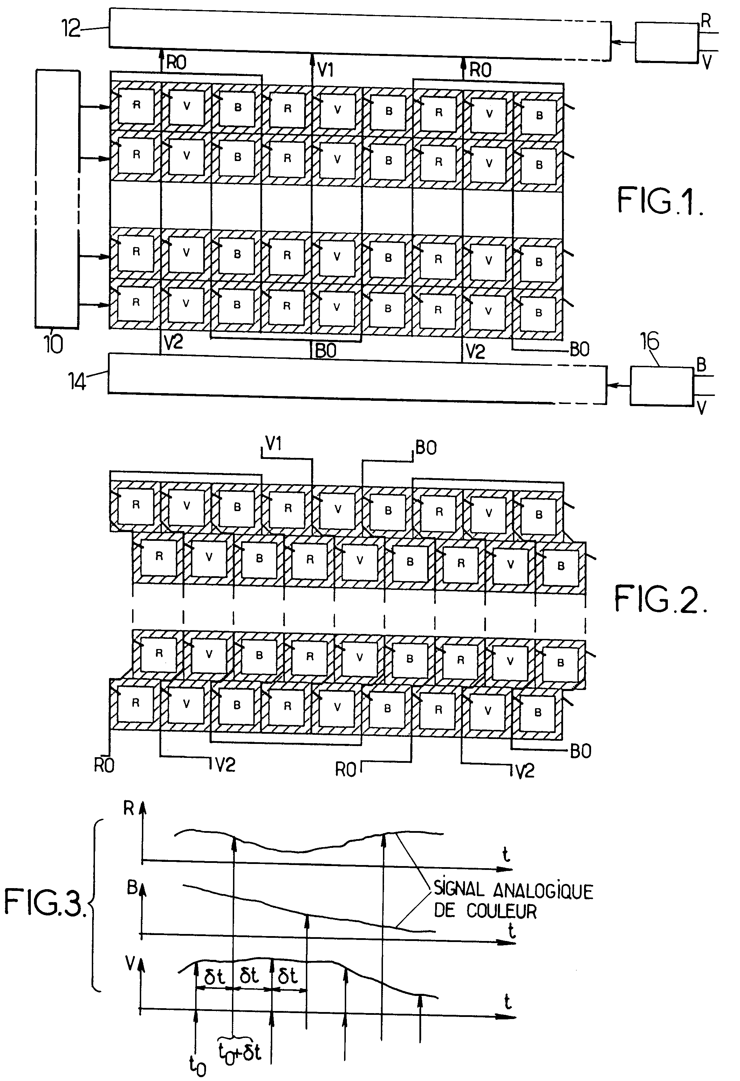

Dans le mode de réalisation montré en figure 1, les pixels rouges, verts et bleus (désignés par les références R, V et B) sont répartis régulièrement suivant un réseau à maille rectangulaire ou carrée. Les colonnes de pixels verts sont commandées chacune par un conducteur de colonne respectif. En revanche, les conducteurs de colonne de pixels rouges Ro sont reliées deux à deux de sorte que l'information rouge d'un macropixel d'ordre N sur une ligne est partagée avec le macropixel N+1. De même, les conducteurs de colonne de pixels bleus Bo sont reliés deux à deux de sorte que l'information bleue du pixel d'ordre N est partagée avec le pixel N-1, ou inversement.

On voit sur la figure 1 que, si le premier point d'une ligne est rouge, le second est vert et le troisième est bleu. Les conducteurs de colonne Ro d'ordre 6K+1 et 6K+4 (où K est un nombre entier) sont reliés en parallèle. De même les conducteurs de colonne Bo d'ordre 6K+3 et 6K+6 sont reliés en parallèle.

Pour éviter des croisements entre conducteurs, les conducteurs de colonne V1 et V2 des pixels verts sont alternativement connectés en bas et en haut de l'écran d'afficheur. Les conducteurs de colonne "rouge" sont connectés en haut et les conducteurs de colonne "bleu" en bas.

Les circuits d'attaque de l'afficheur peuvent avoir une constitution classique et comporter un circuit d'attaque de ligne 10 permettant d'adresser successivement toutes les lignes. Le circuit d'attaque de colonne est partagé en deux unités 12 et 14, dont l'une 12 commande les conducteurs de colonne rouge Ro et la moitié des conducteurs de colonne verte V1. L'unité 14 assure les commandes complémentaires. Ces deux unités peuvent être constituées à partir d'un circuit d'attaque disponible commercialement et destinées aux montages dits "quad". De façon classique, les unités 14 reçoivent des échantillons de couleur provenant d'échantillonneurs 16. L'information fournie à un pixel est conservée jusqu'à l'adressage suivant. La cadence d'échantillonnage est deux fois plus élevée pour les pixels verts : on voit sur la figure 3 que l'information appliquée aux pixels verts est renouvelée avec une période 2δt, tandis que l'information concernant les pixels bleus et rouges est renouvelée avec une période de 4δt.

Dans la variante de réalisation montrée en figure 2, les conducteurs de colonne correspondant à deux colonnes adjacentes de même couleur sont disposés en série et non plus en parallèle. Les pixels de lignes successives sont décalés d'un demi pas.

Le nombre de connexions est dans les deux cas réduit aux deux tiers de celui des connexions habituelles et le pas est agrandi, ce qui est une source de fiabilité. De plus, dans le cas d'un écran à cristaux liquides à matrice active, on réalise une redondance des pixels rouges et bleus puisqu'on les adresse par deux, ce qui améliore le rendement de fabrication.

Dans le mode de réalisation montré en figure 4, les pixels correspondant à une même couleur sont, comme dans le cas de la figure 1, alignés. Mais sur une ligne sont disposés successivement des pixels rouge, vert, bleu, vert, rouge, etc et la surface utile des pixels rouges R et des pixels bleus B est double de la surface utile des pixels verts V. Les pixels disposés suivant une même colonne sont affectés à un même conducteur de colonne qui peut passer entre pixels adjacents. Comme dans le cas précédent, les conducteurs de colonne affectés aux pixels V peuvent être répartis en deux moitiés V1 et V2 reliées à des circuits d'attaque différents. Les conducteurs Bo et Ro peuvent de leur côté être raccordés à des circuits différents, placés chacun d'un côté de l'écran.

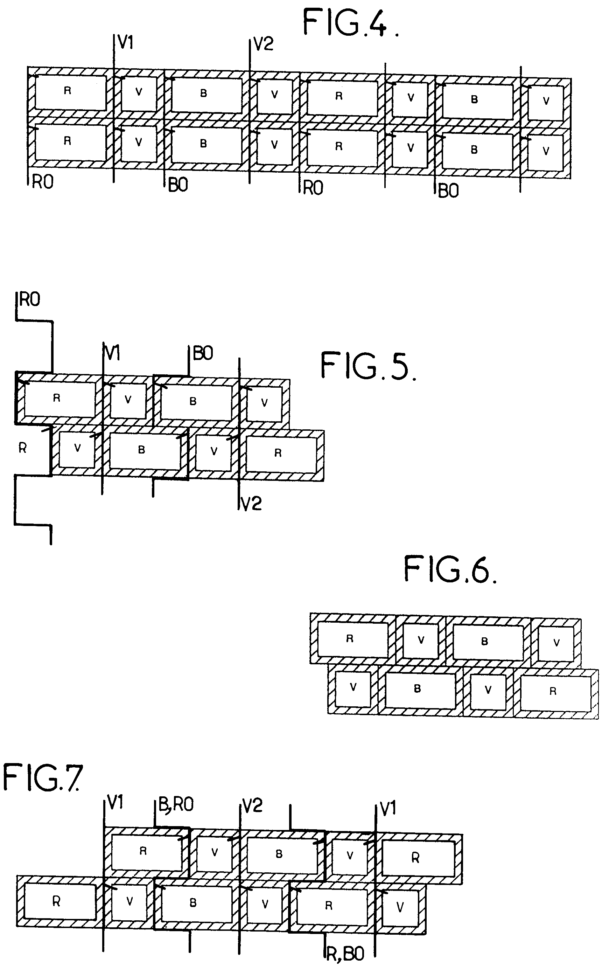

La variante de réalisation montrée en figure 5 se différencie uniquement de celle de la figure 4 en ce que deux lignes de pixels successifs sont décalées d'une distance égale à la largeur d'un pixel vert. Les conducteurs de colonne V1 et V2 peuvent rester rectilignes en passant entre pixels adjacents. En revanche, les conducteurs de colonne Ro et Bo doivent suivre un trajet en grecque pour passer entre les pixels, sous les zones opaques indiquées en tirets.

Le mode de réalisation montré en figure 6 ne se différencie du précédent qu'en ce que le décalage entre pixels dans deux lignes successives est égal à la moitié de la largeur d'un pixel vert V : dans ce cas, tous les conducteurs de colonne doivent avoir une forme en grecque.

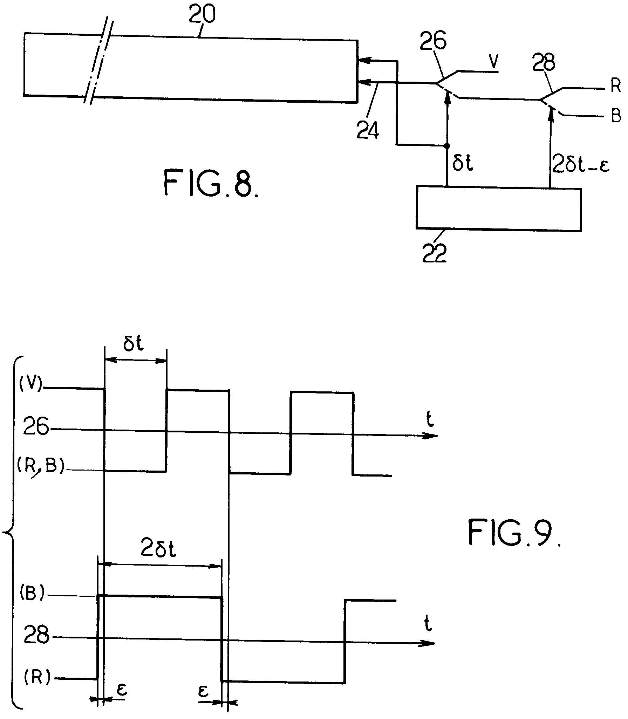

Dans le mode de réalisation montré en figure 7, le décalage entre deux lignes successives est le même que dans le cas de la figure 5. Les conducteurs de colonne affectés à des pixels verts sont rectilignes. Les autres conducteurs de colonne ne sont pas dédiés à une couleur. Lorsque l'adressage passe d'une ligne à la suivante, le signal appliqué correspond à une couleur différente. Ce mode de réalisation présente l'intérêt d'une répartition plus commode des conducteurs. Comme dans le cas des figures 1, 2 et 4, le nombre de connexions est réduit aux deux tiers du nombre précédemment nécessaire. Le pas est agrandi par rapport à celui des écrans classiques. De plus, le doublement de la surface des pixels bleu et rouge réduit le nombre de colonnes à réaliser et augmente le facteur d'ouverture. De plus, le rendement de fabrication est accru du fait de la diminution du nombre de croisements entre conducteurs de ligne et conducteurs de colonne.

On voit que, dans le cas des figures 5 à 7, un macropixel est réalisé à partir d'un point vert qui lui est affecté et de points bleu et rouge voisins qu'il partage avec les macro-pixels adjacents.

L'unité montrée en figure 8 comporte un registre à décalage 20 dans lequel l'avance est provoquée par un signal d'horloge de période δt provenant d'une base de temps 22. L'entrée de données 24 du registre reçoit les signaux de couleur, désignés par V, R et B, par l'intermédiaire d'un jeu de commutateurs. Un premier commutateur 26, commandé à période δt par la base de temps 22, oriente alternativement une branche d'amenée du signal V et une seconde branche vers l'entrée 24, comme indiqué en 26 sur la figure 9. Un interrupteur 28 en cascade avec le premier, commandé à cadence 1/2δt, fournit alternativement les signaux R et B. Le commutateur 28 doit être commandé à un temps ε avant le commutateur 26, comme indiqué sur la ligne 28 de la figure 9.

Ainsi circulent successivement, dans le registre à décalage 20, des échantillons V, R, V, B, V, etc.

L'invention ne se limite pas aux modes particuliers de réalisation qui ont été représentés et décrits à titre d'exemples et il ressort de ce qui précède que d'autres variantes encore sont possibles.

## Revendications

1. Afficheur matriciel en couleurs, fournissant une image sous forme de pixels suivant un réseau régulier, comportant au moins trois jeux de pixels respectivement verts, rouges et bleus, les pixels de chaque jeu étant répartis suivant une matrice comportant des lignes et des colonnes, tous les pixels d'une même ligne étant simultanément adressés pour écriture par des conducteurs de colonne respectifs, caractérisé en ce que chacun des conducteurs de colonne affectés à des pixels rouge ou bleu écrit dans une surface à peu près double de celle dans laquelle écrit un conducteur de colonne affecté à un pixel vert et en ce que la période temporelle ou spatiale d'écriture des pixels verts est moitié de la période d'écriture des pixels rouge et bleu.

2. Afficheur selon la revendication 1, caractérisé en ce que les pixels rouges, verts et bleus (R,V,B) sont répartis régulièrement sur les lignes successives et ont sensiblement la même surface et les conducteurs de colonne (Ro,Bo) correspondant aux pixels rouges et bleus commandent chacun deux colonnes successives de pixels de même couleur à la fois.

3. Afficheur selon la revendication 2, caractérisé en ce que les conducteurs de colonne sont attaqués par un circuit d'attaque en une unité (12) placée d'un côté de l'afficheur et commandant les conducteurs de colonne (Ro) de pixels rouges et la moitié des conducteurs de colonne (V1) de pixels verts et une unité placée de l'autre côté et commandant les conducteurs de colonne de pixels bleus (Bo) et la moitié des conducteurs de colonne de pixels verts (V2).

4. Afficheur selon la revendication 1, 2 ou 3, caractérisé en ce que les colonnes sont constituées chacune de pixels de même couleur alignés les uns avec les autres ou disposés en quinconce.

5. Afficheur selon la revendication 1, caractérisé en ce que la surface de chaque pixel vert (V) est sensiblement moitié de celle des pixels bleu et rouge (B,R) .

6. Afficheur selon la revendication 5, caractérisé en ce que chaque ligne est constituée d'une alternance de pixels rouge, vert, bleu, vert, rouge, vert, et en ce que chaque colonne est commandée par un conducteur distinct (Ro,Bo,V1,V2) affecté à une couleur (figure 4).

7. Afficheur selon la revendication 5, caractérisé en ce que la moitié des conducteurs de colonne (B-Ro, R-Bo) sont utilisés pour commander alternativement les pixels rouges dans une ligne, les pixels bleus dans la ligne suivante (figure 7).
